Europäisches Patentamt

European Patent Office

Office européen des brevets

(11) Publication number: **0 242 010 B1**

# EUROPEAN PATENT SPECIFICATION

(45) Date of publication of patent specification: **10.06.92**  (51) Int. Cl.⁵: **G06F  1/00**

(21) Application number: **87300232.3**

(22) Date of filing: **12.01.87**

(54) **Clock circuit for a data processor.**

(30) Priority: **17.01.86 US 820454**

(43) Date of publication of application:
**21.10.87 Bulletin  87/43**

(45) Publication of the grant of the patent:
**10.06.92 Bulletin  92/24**

(84) Designated Contracting States:
**DE FR GB IT**

(56) References cited:

NEW ELECTRONICS, vol. 17, no. 14, July 1984, pages 29,31-32, Warley, London, GB; G. JONES: "Designing with the 80C88 - A fully static CMOS processor"

COMPUTER DESIGN, vol. 23, no. 6, June 1984, pages 157,160,162,164,166-167, Littleton, Massachusetts, US; W.J. NIEWIERSKI: "CMOS micros enter the mainstream"

PATENT ABSTRACTS OF JAPAN, vol. 9, no. 137 (P-363)[1860], 12th June 1985; & JP-A-60 19 223 (NIPPON DENKI K.K.) 31-01-1985

A MINI-MICRO CONFERENCE RECORD, May 1984, pages 1-5, Northeast, New York, US; R.

OTT; "Eight-bit CMOS microcomputer unit ideal for intelligent telephone systems"

(73) Proprietor: **International Business Machines Corporation**
**Old Orchard Road**
**Armonk, N.Y. 10504(US)**

(72) Inventor: **Arroyo, Ronald Xavier**
**Route 4 Box 167**
**Elgin Texas 78621(US)**
Inventor: **Hanna, James Thomas**
**48 Summit View**
**Austin Texas 78703(US)**

(74) Representative: **Bailey, Geoffrey Alan**
**IBM United Kingdom Limited Intellectual Property Department Hursley Park**
**Winchester Hampshire SO21 2JN(GB)**

## Description

### Technical Field

This invention relates to a clock circuit to generate a clock signal for computing circuits and more specifically relates to the generation of multiple frequency clocking signals.

### Background Art

Computer and processing circuits use a clocking signal to synchronize the operation of internal circuits. The clocking signals are always present whether or not the processing circuits are actually processing data or awaiting further inputs. During these waiting periods, the normal clocking of the processing circuit results in a waste of power. This is especially disadvantageous to a processing circuit having a fixed power source such as a battery.

Battery powered processing circuits are common in portable calculators. One technique for conserving battery power is contained in U.S. Patent 4,317,181 entitled "Four Mode Microcomputer Power Save Operation" that discloses the means to turn off clocked logic while power is maintained to certain specific circuits connected to the memory. In a related patent, U.S. Patent 4,409,665, a processor circuit is disclosed that includes logic forced to a predefined output logic level during inactivity. Power consumption is less when the logic is at this predetermined output logic level.

A similar type of technique is disclosed in U.S. Patent 4,317,180.

U.S. Patent 4,218,876 entitled "Combined Timekeeper and Calculator with Low Power Consumption Features" discloses a dual mode calculator wherein the clocking signals are modified to create additional signals when the calculator is in one specific mode.

A further technique is disclosed in U.S. Patent 4,203,153 entitled "Circuit for Reducing Power Consumption in Battery Operated Microprocessor Based Systems" that includes a circuit for disconnecting the microprocessor from a battery source for a predetermined time interval.

Further prior art clocking arrangements are disclosed in New Electronics, vol 17, no. 14, July 1984, pp 29-32; Computer Design, vol 23, no. 6, June 1984, pp 157-167; and Patent Abstracts of Japan, vol 9, no. 137 (p-363) [1860] 12.6.85.

### Summary of the Invention

Accordingly the present invention provides a clock circuit for clocking a data processor comprising means for producing a clock signal at a first constant frequency for controlling the data processor during normal operation;

means for producing the clock signal at a second, lower constant frequency for controlling the data processor outside normal operation, this lower frequency being non-zero;

means for changing the clock signal from the first frequency to the second, lower frequency in response to a first indication from the data processor that normal operation is suspended; and

means for further changing the clock signal to the first frequency in response to a second indication that normal operation is resumed;

characterised in that:

the clock circuit includes latching means for holding said indication for a predetermined period, said period being longer than a complete cycle of the higher frequency clock signal;

and also in that:

said means for changing the frequency comprises a switch for switching the clock signal from a signal at the first frequency to a signal at the second, lower frequency and further comprises:

means for generating an intermediate signal to indicate that the signal at the first frequency and the signal at the second frequency are in the same logical state and

means for using said intermediate signal to control the time at which the switch may be operated.

Preferably the second, lower frequency is selected from a plurality of available frequencies with the selection being defined by the processor. This provides added versatility and enables the clock signal produced to match more closely the frequency required by the data processing requirements, thereby ensuring that sufficient data processing capacity is available while limiting the power consumed by the processor.

Preferably the clock circuit can switch from the second, lower frequency to a third frequency, which may be zero Hertz. The provision of the zero Hertz option further increases the versatility of the system, since if the clock is stopped in this way it leaves the processor consuming very little power. This reduces the data processing capacity to zero, which may be acceptable in certain circumstances. When the data processing requirement becomes non-zero, the clock frequency is changed to a non-zero value and processing recommences.

The clock circuit may include a register means for storing part of each indication, the part stored defining the particular frequency to be selected.

The second indication may be received from the processor itself or it may be received in response to an interrupt from external circuit means, such as a direct memory access controller.

A clock circuit according to the invention helps to ensure that the clock-low time and clock-high time requirements of the processor are not violated by a glitch generated at the instant of changeover.

## Brief Description of the Drawings

Figure 1 is a block diagram of the clocking circuit connected to a processor, including schematic details of the clock register and the frequency generator,

Figure 2 is a schematic diagram of the clock control circuit, and

Figure 3 is a timing diagram illustrating certain signals in the clocking control circuit.

## Detailed Description of the Invention

In the preferred embodiment, the invention includes a clocking circuit that is connected to a processor. The output of the clocking circuit is a clocking signal which is used by the processor to control processor operation. The clocking circuit includes a clocking control circuit connected to a clock register and a frequency generator. The frequency generator includes an oscillator and divide-by circuits that provides several signals, each having a unique frequency. The clock register is connected to the processor to receive data from the processor and interrupts. The clock control circuit is connected to both the clock register and the frequency generator and changes the frequency of the clock signal in accordance with inputs from the clock register. However, these changes are only made during predetermined time intervals.

The actual frequency of the clock signal output by the clock control circuit is determined by the data contents of the clock register. The clock register receives inputs from a data bus from the processor. In addition, one bit position of this register is set in response to an occurrence of an interrupt or a direct memory access request from the processor.

In operation, the processor through the data bus may direct the clock control circuit to output a low clock frequency. This is accomplished by the processor loading specific data into the clock register. The clock register is input to the clock control circuit which selects the appropriate signal frequency from the frequency generator. The operation of the processor at the lower clock rate results in lower power consumption. When either an interrupt or a direct memory access request is received, the content of one bit position of the clock register is automatically set to a one which, when input to the clock control circuit, overrides the effect of the remaining bits in the clock register and results in the clock control circuit providing a clock signal at the normal operating frequency. Implementation of this clocking circuit allows programmability of the processor operating speed while also automatically providing a normal processor operating speed upon the occurrence of some event such as an interrupt or a direct memory access request.

Alternatively, the processor may direct the clock control circuit to output a static clock, i.e. a clock at a frequency of zero Hertz. This suspends operation of the processor entirely, resulting in further reduced power consumption. When either a direct memory access request or an interrupt is received the clock control circuit provides a clock signal at the normal operating frequency, as above.

Power conservation in the operation of a data processor becomes important when the processor is connected to a battery or some other fixed power supply. The power drain of a processor fabricated with CMOS technology is directly related to the number of logic state transitions that occur. The higher the number of logic state transitions, the larger the amount of power that is consumed. One way to reduce the number of logic state transitions is to slow the processor system clock frequency during appropriate times such as when the processor is in an idle state, e.g. waiting for a keyboard input. In some implementations, the processor system clock can be entirely shutoff until a system interrupt (INT), a non-maskable interrupt (NMI), or a direct memory access (DMA) request occurs. After such an event does occur, the processor system clock needs to be operating at its normal frequency in order that the processor may perform at the normal operating speed.

When the clock signal frequencies are changed, the changes must occur in a manner to ensure that neither an invalid clock high-time nor an invalid clock low-time occurs. In other words, the change of frequency must occur such that the resulting clock signal still provides the minimum clock high-time and minimum clock low-time as specified for the processor. In the preferred embodiment, the processor is a Harris or Intel 80C88 CMOS microprocessor. The specification for this microprocessor is herein incorporated by reference. According to this specification, the minimum clock low-time is 118 nanoseconds and the minimum clock high-time is 69 nanoseconds.

The present invention provides circuitry that enables the processor to specify a lower than normal clock frequency, optionally zero Hertz, while ensuring that the clock frequency will be restored to the normal operating frequency on the occurrence of events such as interrupts or DMA requests. Furthermore, the present invention provides that the transition of clock frequencies will occur such that the transitions will conform to the minimum clock high and minimum clock low values specified.

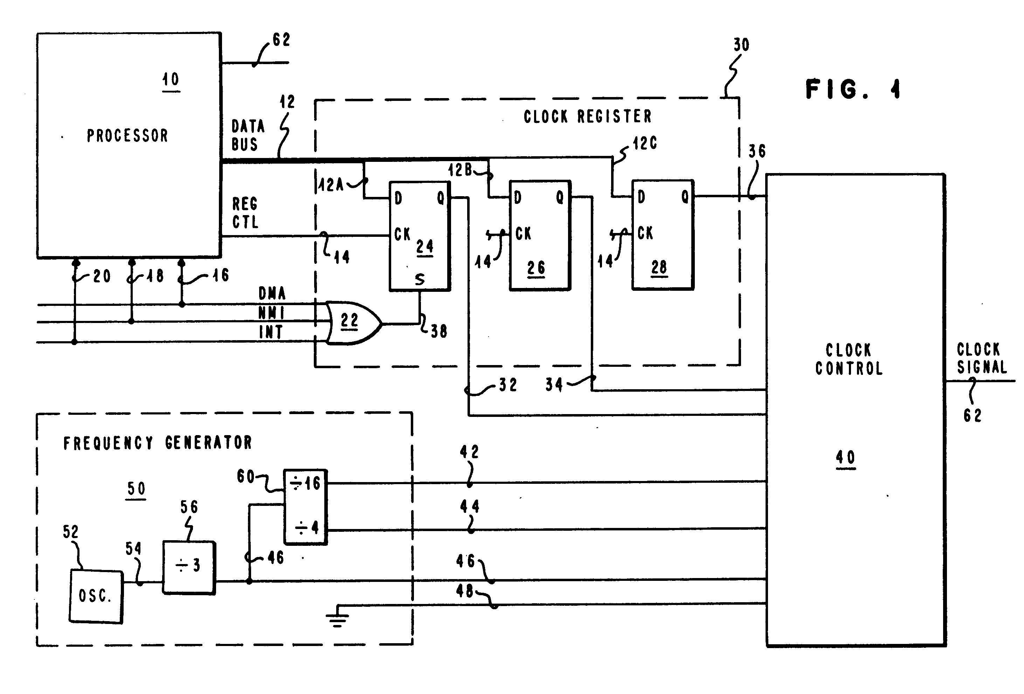

Figure 1 illustrates a block diagram of the present invention connected to a processor 10, the 80C88 in the preferred embodiment. The clock circuit invention includes a clock register 30, frequency generator 50 and a clock control circuit 40. The clock control circuit 40 provides a clock signal output on line 62 which is input to processor 10. This clock signal is the system clock for the processor 10. The processor 10 controls the speed of the clock signal on line 62 by its interconnection to the clock register 30.

The clock register 30 includes a data bus 12, a register control line 14, and processor event lines 16, 18 and 20. The data bus 12 is connected to three D type flip-flops 24, 26, and 28. The register control line 14 is connected to the clocking input to flip-flops 24, 26 and 28. The external events on lines 16, 18 and 20 include a DMA request (DMA), a non-maskable interrupt (NMI), and an interrupt (INT) respectively. Lines 16, 18 and 20 are input to an OR gate 22 whose output on line 38 is connected to the set input on flip-flop 24. The outputs of flip-flops 24, 26 and 28, on lines 32, 34, and 36 respectively, are provided to the clock control circuit 40 as shown. In operation, processor 10 provides the input values to the three flip-flops 24, 26 and 28 over data bus 12. The register control line 14 includes a clocking control signal such as an I/O write signal that enables the D inputs to the flip-flops 24, 26 and 28 to be loaded from data bus 12. The OR gate 22 sets the output of flip-flop 24 to a 1 upon the occurrence of any of the external events, i.e., a DMA request, a NMI or an INT occurrence.

The frequency generator 50 consists of an oscillator 52 providing an output on line 54 to a divide-by three circuit 56. The divide-by three circuit 56 provides a frequency signal on line 46 to both the clock control circuit 40 and to another divide-by circuit 60. The divide-by circuit 60 provides two signals on lines 42 and 44 respectively. In the preferred embodiment, oscillator 52 produces a signal having a frequency of 14.318 megahertz. This signal is provided on line 54 to the divide-by three circuit 56 which produces a 4.773 megahertz signal on line 46, with a 33% duty cycle. The divide-by circuit 60 includes a divide-by 16 output and a divide-by 4 output that produced a 0.298 megahertz signal on line 42 and a 1.193 megahertz signal on line 44, respectively. The frequency generator 50 further includes a line 48 that is tied to ground for producing a 0 hertz signal.

In operation, the data on lines 32, 34, and 36 determines which of the clock signals on lines 42, 44, 46 and 48 will be provided on line 62 by the clock control circuit.

In the preferred embodiment, the normal operating clock frequency is 4.773 megahertz as provided on line 46. The lower frequencies on lines 42 and 44 are integer fractions of this normal operating frequency.

In operation, the processor 10 may designate a lower clock speed by providing the appropriate input via data bus 12 to the clock register 30. This input when provided to the clock control circuit 40 will designate the lower frequency signal as the clock signal on line 62. Upon the occurrence of any one external event on lines 16, 18 or 20, the output of clock register 30 will be changed such that the clock control circuit 40 will provide the normal frequency clock signal from line 46 on line 62.

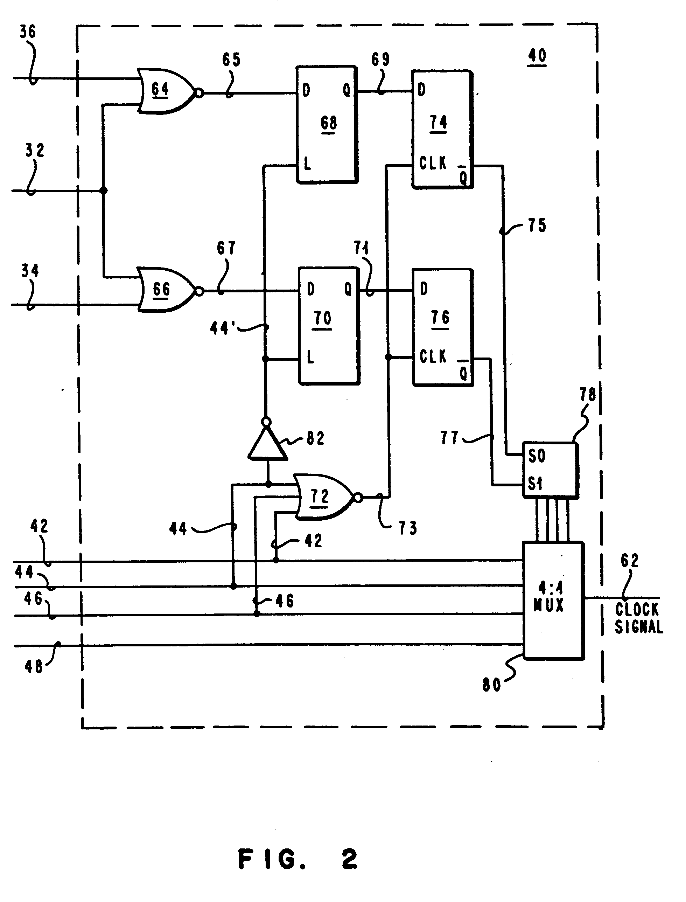

Figure 2 is a schematic diagram of the clock control circuit 40. Lines 32, 34, and 36 are input to two NOR gates 64 and 66 which provide outputs on lines 65 and 67 respectively to two latches 68 and 70. The input on line 32 from flip-flop 24 (see Figure 1) is provided to both NOR gates 64 and 66 such that the occurrence of an external event, i.e., a DMA request or the occurrence of an INT or a NMI signal, will result in a "zero" input to both latches 68 and 70 by lines 65 and 67 respectively. Latches 68 and 70 provide outputs on lines 69 and 71 respectively to the flip-flops 74 and 76. The output of the flip-flops 74 and 76, on lines 75 and 77 respectively, are provided to a multiplexer switch 78. The multiplexer switch 78 is connected to a four to one multiplexer 80 which connects line 62 to one of the four input lines 42, 44, 46 or 48 to provide the clock signal at the appropriate frequency. In other words, the two binary bits output from the flip-flops 74 and 76 designate one of the input lines 42, 44, 46 or 48 as the clock signal.

To ensure that the minimum clock high and minimum clock low times are provided by the clock signal output on line 62, additional circuitry is included in the clock control circuit 40. This circuitry includes NOR gate 72 and inverter 82 connected as shown. Specifically, line 44 is input to inverter 82 which provides an inverted signal on line $44'$ to latches 68 and 70. The signal on line $44'$ latches the inputs on lines 65 and 67 to latches 68 and 70 respectively for the negative period of the 1.193 megahertz signal on line 44. This signal on line $44'$ ensures that the output of latches 68 and 70 are held constant on lines 69 and 71 for the appropriate time interval.

NOR gate 72 is connected to lines 42, 44, and 46 to provide an output on line 73 which is the clocking signal input to the flip-flops 74 and 76. This circuit arrangement ensures that all frequency input signals are in the same logical state before the multiplexer 80 is allowed to change from one frequency signal to another. Since line 48 is always "low" there is no need to include it as an input to NOR gate 72.

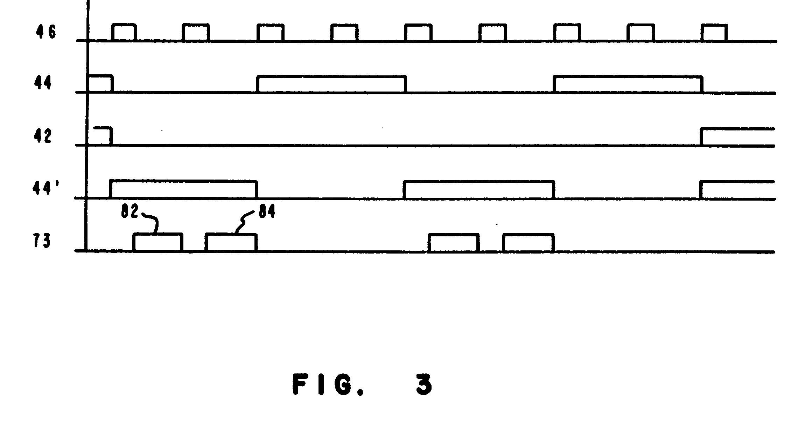

Figure 3 is a timing diagram illustrating the 4.773 megahertz signal on line 46, the 1.193 megahertz signal on line 44, the 0.298 megahertz signal on line 42, the inverted 1.193 megahertz on line 44', and the signal on line 73. As previously discussed, the signal on line 44' ensures that the contents of latches 68 and 70 are held constant for the time period illustrated in Figure 3. During this time period, two positive pulses 82 and 84 are provided on line 73 which allow the signals on lines 69 and 71 to be clocked in as inputs to the flip-flops 74 and 76 and thus allowing the outputs on lines 75 and 77 respectively to change. Therefore, the signal on line 44' allows the outputs of latches 68 and 70 to be held constant and stabilize before they are clocked as inputs into latches 74 and 76. In addition, the clocking signal on line 73 ensures that the outputs of the flip-flops 74 and 76, the multiplexer selector inputs, only change when all of the signals on lines 42, 44, 46 and 48 are low. This ensures that multiplexer switching glitches do not propagate through to the clock signal line 62. Thus, the signals on lines 44' and 73 ensure that glitches do not occur on clock signal line 62 that would result from transitions on lines 32, 34, and 36 or upon transitions of signals on lines 42, 44, 46 or 48.

## Claims

1. Clock circuit for clocking a data processor (10) comprising means (56) for producing a clock signal at a first constant frequency for controlling the data processor during normal operation;

means (60) for producing the clock signal at a second, lower constant frequency for controlling the data processor outside normal operation, this lower frequency being non-zero;

means (40) or changing the clock signal from the first frequency to the second, lower frequency in response to a first indication from the data processor that normal operation is suspended; and

means (40) for further changing the clock signal to the first frequency in response to a second indication that normal operation is resumed;

characterised in that:

the clock circuit includes latching means (68, 70) for holding said indication for a predetermined period, said period being longer than a complete cycle of the higher frequency clock signal;

and also in that:

said means (40) for changing the frequency comprises a switch (80) for switching the clock signal from a signal at the first frequency to a signal at the second, lower frequency and further comprises:

means (72) for generating an intermediate signal to indicate that the signal at the first frequency and the signal at the second frequency are in the same logical state and

means (74, 76) for using said intermediate signal to control the time at which the switch (80) may be operated.

2. Clock circuit as claimed in claim 1 in which said second, lower frequency is selected from a plurality of frequencies and the first indication further defines the particular frequency to be selected.

3. Clock circuit as claimed in claim 2 comprising means (60) for producing the clock signal at a third frequency, selected from said plurality of frequencies, and

means (40) for changing the clock signal from the second frequency to the third frequency in response to a third indication, the third indication further defining the particular frequency to be selected.

4. Clock circuit as claimed in claim 2 or claim 3 in which the plurality of frequencies includes a frequency of zero Hertz.

5. Clock circuit as claimed in any preceding claim arranged to receive such a second indication from the data processor itself.

6. Clock circuit as claimed in any preceding claim arranged to receive such a second indication in response to an interrupt from external circuit means.

## Revendications

1. Circuit d'horloge destiné à synchroniser un processeur de données (10), comprenant un moyen (56) pour produire un signal d'horloge à une première fréquence constante en vue de la commande du processeur de données au cours du fonctionnement normal;

un moyen (60) pour produire le signal d'horloge à une deuxième fréquence constante, inférieure à la première, en vue de la commande du processeur de données en dehors de son fonctionnement normal, cette fréquence inférieure étant une fréquence non-nulle;

un moyen (40) pour changer le signal d'horloge de la première fréquence à la deuxième fréquence, inférieure à la première, en réponse à une première indication du processeur de données selon laquelle le fonctionnement normal est suspendu; et

un moyen (40) pour changer en outre le signal d'horloge à la première fréquence en réponse à une deuxième indication selon laquelle le fonctionnement normal est repris;

caractérisé en ce que:

le circuit d'horloge comporte un moyen de verrouillage (68, 70) pour maintenir ladite indication pendant une période prédéterminée qui est plus longue qu'un cycle complet du signal d'horloge de la fréquence supérieure;

et aussi que:

le moyen (40) pour changer la fréquence comprend un commutateur (80) pour commuter le signal d'horloge d'un signal à la première fréquence à un signal à la deuxième fréquence, inférieure à la première, et comprend en outre:

un moyen (72) pour générer un signal intermédiaire servant à indiquer que le signal à la première fréquence et le signal à la deuxième fréquence sont dans le même état logique et

un moyen (74, 76) pour utiliser ce signal intermédiaire pour contrôler l'instant auquel le commutateur (80) peut être manoeuvré.

2. Circuit d'horloge selon la revendication 1, dans lequel la deuxième fréquence, inférieure à la première, est sélectionnée parmi une pluralité de fréquences et la première indication définit en outre la fréquence particulière à sélectionner.

3. Circuit d'horloge selon la revendication 2, comprenant un moyen (60) pour produire le signal d'horloge à une troisième fréquence, sélectionnée parmi ladite pluralité de fréquences, et

un moyen (40) pour faire passer le signal d'horloge de la deuxième fréquence à la troisième fréquence en réponse à une troisième indication qui définit en outre la fréquence particulière à sélectionner.

4. Circuit d'horloge selon la revendication 2 ou 3, dans lequel la pluralité de fréquences comporte une fréquence de zéro Hertz.

5. Circuit d'horloge selon l'une quelconque des revendications précédentes et agencé pour recevoir une deuxième indication du processeur de données lui-même.

6. Circuit d'horloge selon l'une quelconque des revendications précédentes et agencé pour recevoir une deuxième indication en réponse à une interruption à partir d'un circuit externe.

**Patentansprüche**

1. Taktschaltung zum Takten eines Datenprozessors (10), mit einem Mittel (56) zum Erzeugen eines Taktsignals mit einer ersten konstanten Frequenz zur Steuerung des Datenprozessors während des Normalbetriebes;

mit einem Mittel (60) zum Erzeugen eines Taktsignals mit einer zweiten, niedrigeren konstanten Frequenz zur Steuerung des Datenprozessors außerhalb des Normalbetriebes, wobei diese niedrigere Frequenz von Null verschieden ist;

mit einem Mittel (40) zum Ändern des Taktsignals von der ersten Frequenz auf die zweite, niedrigere Frequenz, als Antwort auf eine erste Anzeige seitens des Datenprozessors, daß der Normalbetrieb ausgesetzt ist; und

mit Mitteln (40) zum weiteren Ändern des Taktsignals auf die erste Frequenz, als Antwort auf eine zweite Anzeige, daß der Normalbetrieb wieder aufgenommen ist;

dadurch gekennzeichnet, daß

die Taktschaltung Latchmittel (68, 70) zum Halten der genannten Anzeige über eine vorbestimmte Dauer aufweist, wobei diese Dauer länger ist, als eine vollständige Periode des Taktsignals mit der höheren Frequenz;

und daß auch:

das Mittel (40) zum Ändern der Frequenz einen Schalter (80) aufweist, um das Taktsignal von einem Signal mit der ersten Frequenz auf ein Signal mit der zweiten, niedrigeren Frequenz zu schalten, und weiters aufweist:

ein Mittel (72) zum Erzeugen eines Zwischensignals, um anzuzeigen, daß sich das Signal mit der ersten Frequenz und das Signal mit der zweiten Frequenz in dem gleichen logischen Zustand befinden, und

Mittel (74, 76), welche das Zwischensignal benutzen, um den Zeitpunkt, zu welchem der Schalter (80) betätigt werden darf, zu steuern.

2. Taktschaltung nach Anspruch 1, bei welcher die zweite, niedrigere Frequenz aus einer Mehrzahl von Frequenzen ausgewählt wird und die erste Anzeige weiters die besondere Frequenz, die ausgewählt werden soll, festlegt.

3. Taktschaltung nach Anspruch 2, welche ein Mittel (60) aufweist, um das Taktsignal mit einer dritten, aus der Mehrzahl von Frequenzen ausgewählten Frequenz zu erzeugen, und ein Mittel (40) aufweist, und als Antwort auf eine dritte Anzeige das Taktsignal von der zweiten Frequenz auf die dritte Frequenz zu ändern, wobei die dritte Anzeige weiters die besondere Frequenz, die ausgewählt werden soll, festlegt.

4. Taktschaltung nach Anspruch 2 oder 3, bei welcher die Mehrzahl von Frequenzen eine Frequenz mit Null Hertz beinhaltet.

5. Taktschaltung nach einem der vorgehenden Ansprüche, die dazu eingerichtet ist, eine solche zweite Anzeige von dem Datenprozessor selbst zu erhalten.

6. Taktschaltung nach einem der vorgehenden Ansprüche, die dazu eingerichtet ist, eine solche zweite Anzeige als Antwort auf einen Interrupt von externen Schaltungsmitteln zu erhalten.

FIG. 4

FIG. 2

9

FIG. 3